**Europäisches Patentamt**

**European Patent Office**

**Office européen des brevets**

(11) Veröffentlichungsnummer: **0 308 682**

**A2**

# EUROPÄISCHE PATENTANMELDUNG

(21) Anmeldenummer: **88113921.6**

(22) Anmeldetag: **26.08.88**

(51) Int. Cl.⁴: **G01M 17/02**

(30) Priorität: **23.09.87 DE 3731925**

(43) Veröffentlichungstag der Anmeldung:
**29.03.89 Patentblatt 89/13**

(84) Benannte Vertragsstaaten:
**AT BE CH DE ES FR GB GR IT LI LU NL SE**

(71) Anmelder: **Continental Aktiengesellschaft**
**Königsworther Platz 1**
**D-3000 Hannover 1(DE)**

(72) Erfinder: **Flebbe, Werner**
**Albert-Schweitzer-Strasse 52**
**D-3057 Neustadt a. Rbge. 1(DE)**

(54) **Verfahren und Vorrichtung zur Reifenaufnahme, insbesondere bei Messung des Rundlaufs bei einem Fahrzeugluftreifen.**

(57) Verfahren und Vorrichtung zur Reifenaufnahme, insbesondere bei Messung des Rundlaufs bei einem Fahrzeugluftreifen (11), der im Betriebszustand mit seinen Wülsten (18) am radial inneren Umfang einer Felge befestigt ist. Die Prüfvorrichtung (10) ist dazu mit einer zweigeteilten Meßfelge versehen der beiden Felgenringe (12) axial verschiebbar sind. Die axial verfahrbaren Felgenringe sind mit ausklappbaren Felgenhornsegmenten (13) versehen, gegen die außerhalb des Reifens angeordnete Gegenstücke (14) axial verfahrbar sind. Der in seiner Trapezform aufgezogene Reifen wird mit seinen Wulstzonen (20) von den Gegenstücken erfaßt und in seine Felgensitzposition gebracht. Die ausklappbaren Felgenhornsegmente werden radial nach innen geklappt, so daß die Wülste zwischen den Gegenstücken und den Felgenringen gehalten werden. Der Wulstsitz wird durch Dichtlippen abgedichtet.

FIG.3

EP 0 308 682 A2

**Verfahren und Vorrichtung zur Reifenaufnahme, insbesondere bei Messung des Rundlaufs bei einem Fahrzeugluftreifen**

Die Erfindung betrifft ein Verfahren und eine Vorrichtung zur Reifenaufnahme, insbesondere bei Messung des Rundlaufs bei einem Fahrzeugluftreifen, der im Betriebszustand mit seinen Wülsten am radial inneren Umfang einer Felge befestigt ist, mit einer Meßfelge, die aus zwei axial verfahrbaren Felgenringen besteht, der zu prüfende Reifen trapezförmig mit axial nach außen weisenden Seitenwänden gefertigt ist und der zu prüfende Reifen in seiner Trapezform auf die Meßfelge aufgezogen wird.

Herkömmliche Reifen, deren Wülste am radial äußeren Umfang einer Felge angeordnet sind, werden auf Rundlauf mit einer zweigeteilten Meßfelge gemessen, die von außen an den Reifen herangeführt wird. Die beiden axial gegeneinander verfahrbaren Meßfelgenteile nehmen dabei den Reifen mit seinen Wulstsitzflächen in gleicher Weise auf, wie den Fahrzeugreifen während des Fahrbetriebs. Bei einem neuentwikkelten Reifen-Felgen-System, wie es in der DE-OS 30 00 428 beschrieben ist, bei dem der Reifen mit seinen Wülsten am radial inneren Umfang der Felge angeordnet ist, besteht das Problem, daß die Meßfelge in das Innere des Reifens eingeführt werden muß, dabei jedoch einen größeren Durchmesser hat, als der Innendurchmesser des Reifens beträgt.

In der DE-OS 35 41 188 ist dazu vorgeschlagen worden, die axial verschiebbaren Felgenhälften aus mehreren radial verstellbaren Felgensegmenten aufzubauen. Eine derartige Meßfelge kann im radial zusammmgefahrenen Zustand, d.h., mit verkleinertem Durchmesser, in den einen kleineren Innendurchmesser aufweisenden Reifen eingefahren und in Meßposition auseinander gefahren werden. Problematisch dabei ist jedoch, daß der Innenraum abgedichtet und die Reifenseitenwände aus ihrer Trapezform, in der sie gefertigt werden, in den Montagezustand gebracht werden müssen.

Dazu ist in der deutschen Patentanmeldung P 36 04 023.1 vorgeschlagen worden, einen derartigen Luftreifen mit seitlich nach außen geklappten Seitenwänden und -wülsten, d.h., so wie er vulkanisiert worden ist, aufgrund Lauf zu messen. Die tatsächlichen Betriebsverhältnisse sind bei einer derartigen Vorrichtung jedoch nur bedingt reproduzierbar, und man ist nach wie vor bestrebt, Reifen in ihrer tatsächlichen Montagestellung zu messen.

Aufgabe der vorliegenden Erfindung ist es, ein Verfahren zu schaffen, mit dem Reifen der eingangs beschriebenen Art leicht in Montagestellung gebracht und gemessen werden können, sowie eine Vorrichtung zu schaffen, mit der dieses Verfahren durchgeführt werden kann.

Gelöst wird diese Aufgabe zunächst dadurch, daß die axial verfahrbaren Felgenringe mit ausklappbaren Felgenhornseg menten versehen sind, außerhalb des Reifens an sich bekannte Gegenstücke axial gegen die Felgenhornsegmente gefahren werden, der in seiner Trapezform aufgezogene Reifen an seinen Wulstzonen von den Gegenstükken erfaßt und die ausklapbaren Felgenhornsegmente radial nach innen geklappt werden, so daß die Wülste mit ihren Wulstzonen zwischen den Gegenstücken und den Felgenringen in Felgensitzposition gebracht werden, Durch diese Maßnahmen wird ein Verfahren geschaffen, mit dem Reifen der eingangs beschriebenen Art schnell und einfach in ihre Montageposition gebracht und gemessen werden können.

Bei einer Vorrichtung zur Druchführung dieses Verfahres ist es vorgesehen, daß daß die axial verfahrbaren Felgenringe mit umklappbaren Felgenhornsegmenten versehen sind. Durch diese Maßnahme wird eine Vorrichtung geschaffen, mit der ein trapezförmig geheizter Reifen schnell und einfach in Felgensitzposition gebracht werden kann, die leicht abzudichten ist und mit der innerhalb kürzester Zeit eine große Anzahl von Reifen gemessen werden können.

Weitere vorteilhafte Maßnahmen sind in den Unteransprüchen beschrieben. Die Erfindung ist in der beiliegenden Zeichnung dargestellt und wird nachfolgend näher beschrieben; es zeigt:

Fig. 1 eine Rundlauf-Meßvorrichtung mit Felgenringen und hochgeklappten Felgenhornsegmenten und Gegenstücken, vor der Montage;

Fig. 2 die Detaildarstellung eines Felgenhorns und angefahrenem Gegenstück bei einer Vorrichtung nach der Fig. 1;

Fig. 3 eine Meßvorrichtung nach der Fig. 1 mit ausgeklapptem Felgenhorsegmenten und gegengefahrenen Gegenstücken mit einem Reifen in Felgensitzposition.

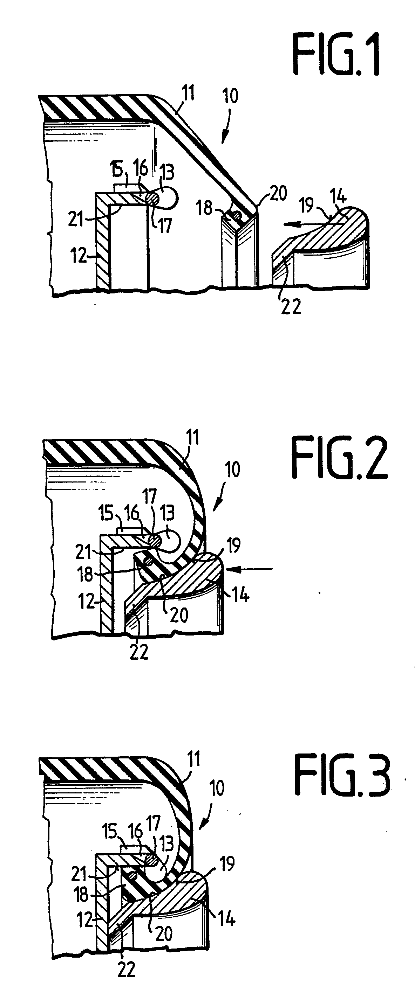

Die in den Figuren 1 bis 3 dargestellte Rundlauf-Prüfvorrichtung 10 besteht im wesentlichen aus zwei axial gegeneinander verschiebbaren Felgenringen 12, die mit Felgenhornsegmenten 13 versehen sind. Die Felgenringe 12 können zur Montage bzw. Demontage des Reifens 11 auf die jeweils gewünschte Felgenmaulweite axial verfahren werden. Der Reifen 11 wird dabei im Wulst 18 oval verformt und in seiner Trapezform über die Rundlauf-Prüfvorrichtung 10 gestülpt.

Nach dem Auseinanderfahren der Felgenringe 12 auf die gewünschte Felgenmaulweite werden von außerhalb des Reifens 11 Gegenstücke 14 gegen die Wulstzone 20 des Reifens 11 verfahren.

Die Gegenstücke 14 weisen Stützflächen 19 zur Aufnahme der Wulstzonen 20 des Reifens 11 auf. Wie die Fig. 2 zeigt, werden die Wülste 18 mit diesen Stützflächen 19 in die Wulstsitz 21 am radial inneren Umfang der Felgenringe 12 in Felgensitzposition gedrückt.

Die Felgenhornsegmente 13 sind in Drehgelenken 17 achsparallel umklappbar. Wie die Fig. 3 zeigt, sind dazu Ausrücker 15 vorgesehen, die Felgenhornsegmente über Ausrückhebel 16 aus einer waagerechten in eine radial nach innen weisende Position umklappen. Die Felgenringe 12 weisen dazu eine Vielzahl von Felgenhornsegmenten auf. Da die Teilungsfugen der Felgenhornsegmente innerhalb des Reifens 11 liegen, treten Dichtprobleme hier nicht auf. Die Stützflächen 19 dichten den Innenraum des Reifens 11 an den Wulstzonen 20 ab, wobei Dichtlippen 22 zur Unterstützung vorgesehen sind. Die Dichtlippen 22 sind den Gegenstücken 14 zugeordnet und dichten diese gegenüber den Felgenringen 12 ab.

Zur Demontage werden die Gegenstücke 14 wieder axial auseinander gefahren und die Felgenhornsegmente 13 in eine waagerechte Position zurückgeklappt. Die Wülste 18 kommen dadurch frei und der Reifen 11 kann von der Rundlauf-Prüfvorrichtung 10 abgenommen werden.

**Ansprüche**

1. Verfahren zur Reifenaufnahme, insbesondere bei Messung des Rundlaufs bei einem Fahrzeugluftreifen, der im Betriebszustand mit seinen Wülsten am radial inneren Umfang einer Felge befestigt ist, mit einer Meßfelge, die aus zwei axial verfahrbaren Felgenringen besteht, der zu prüfende Reifen trapezförmig mit axial nach außen weisenden Seitenwänden gefertigt ist und der zu prüfende Reifen in seiner Trapezform auf die Meßfelge aufgezogen wird, dadurch gekennzeichnet, daß die axial verfahrbaren Felgenringe mit ausklappbaren Felgenhornsegmenten versehen sind, außerhalb des Reifens an sich bekannte Gegenstücke axial gegen die Felgenhornsegmente gefahren werden, der in seiner Trapezform aufgezogene Reifen an seinen Wulstzonen von den Gegenstücken erfaßt und die ausklapbaren Felgenhornsegmente radial nach innen geklappt werden, so daß die Wülste mit ihren Wulstzonen zwischen den Gegenstücken und den Felgenringen in Felgensitzposition gebracht werden.

2. Verfahren nach Anspruch 1, dadurch gekennzeichnet, daß die Wulstsitze durch Dichtlippen abgedichtet werden.

3. Vorrichtung zur Reifenaufnahme, insbesondere bei Messung des Rundlaufs eines Fahrzeugluftreifens, der im Betriebszustand mit seinen Wülsten am radial inneren Umfang einer Felge befestigt ist, mit einer Meßfelge, die aus zwei axial verfahrbaren Felgenringen besteht, der zu prüfende Reifen trapezförmig mit axial nach außen weisenden Seitenwänden gefertigt und in dieser seiner Trapezform auf die Meßfelge aufgezogen ist, insbesondere zur Durchführung eines Verfahrens nach den Ansprüchen 1 und 2, dadurch gekennzeichnet, daß die axial verfahrbaren Felgenringe (12) mit umklappbaren Felgenhorsegmenten (13) versehen sind.

4. Vorrichtung nach Anspruch 3, dadurch gekennzeichnet, daß die Gegenstücke (14) Sitzflächen (19) zur Aufnahme der äußeren Wulstzonen (20) des zu prüfenden Luftreifens (11) aufweisen.

5. Vorrichtung nach den Ansprüchen 3 und 4, dadurch gekennzeichnet, daß die Felgenringe (12) an ihrem radial äußeren Umfang mit Ausrückern (15) versehen sind und die Felgenhornsegmente (13) mit den Ausrückern (15) aus einer radial-axial äußeren Position in eine axial-radial innere Position umklappbar sind.

6. Vorrichtung nach den Ansprüchen 3 bis 5, dadurch gekennzeichnet, daß den Ausrückern (15) Ausrückhebel (16) zugeordnet sind.

7. Vorrichtung nach den Ansprüchen 3 bis 6, dadurch gekennzeichnet, daß die Gegenstücke (14) mit Dichtlippen (22) aufweisen, mit denen sie gegenüber den Felgenringen (12) abdichtbar sind.

8. Vorrichtung nach den Ansprüchen 3 bis 7, dadurch gekennzeichnet, daß die Gegenstücke (14) radial innerhalb der Felgenhornsegmente (13) angeordnet sind.

9. Vorrichtung nach den Ansprüchen 3 bis 8, dadurch gekennzeichnet, daß die Felgenhornsegmente (13) achsparallel angeordnet sind.

10. Vorrichtung nach den Ansprüchen 3 bis 9, dadurch gekennzeichnet, daß die Felgenringe (12) in Umfangsrichtung ungeteilt sind.

# FIG.1

# FIG.2

# FIG.3